# EUROPEAN PATENT APPLICATION

(11) **EP 2 808 484 A1**
(43) Date of publication of application: **03.12.2014**
(21) Application number: 13002834.3
(22) Date of filing: 31.05.2013
(51) Int. Cl.: F01C 1/063, F01C 11/00, F02B 53/00

(54) **Four stroke rotary piston engine**

(71) Applicant: Koza, Stefan Juan, 400 La Massana (AD)
(72) Inventor: Koza, Stefan Juan, 400 La Massana (AD)
(74) Representative: Juncosa Miro, Jaime

(57) **Abstract**

The four stroke rotary piston engine comprises one pair of toroidal chambers (1, 2) provided with respective rotary pistons (3, 4) attached to a common power shaft (8), wherein the intake and compression strokes are performed in one of the toroidal chambers (1) and the power and exhaust strokes are performed in the other of the toroidal chambers (2). The intake/compression toroidal chamber (1) has an air intake (9) and the power/exhaust toroidal chamber (2) has a fuel injector (11), ignition means and an exhaust port (12). Thrust plates (5, 6, 7) are provided and actuated to respectively open and close the intake/compression and power/exhaust toroidal chambers (1, 2) synchronously with the movements of the respective rotary pistons (3, 4) therein. Compressed air is transferred from the intake/compression toroidal chamber (1) to the power/exhaust toroidal chamber (2) via a transfer pipe (10) just before ignition.

## Description

### Technical field

The present invention relates to a four stroke rotary piston engine comprising at least one pair of toroidal chambers provided with respective rotary pistons attached to a common power shaft, wherein the intake and compression strokes are performed in one of the toroidal chambers and the power and exhaust strokes are performed in the other of the toroidal chambers of each pair, and wherein compressed air is transferred from the intake/compression toroidal chamber to the power/exhaust toroidal chamber of each pair via a transfer pipe just before ignition.

### State of the prior art

Reciprocating piston engines have a significant reciprocating mass which is consecutively accelerated and retarded with a considerable energy waste, and said reciprocating mass is in most configurations difficult to balance with the result of a high level of vibration, friction and wear.

Rotary piston engines are well known in which reciprocating mass is reduced or eliminated.

For example, US 1773635 A discloses a rotary piston engine comprising a single toroidal chamber having an axis of revolution, a rotor attached to a power shaft coaxial with the axis of revolution and having a power piston and an exhaust piston arranged to rotate in one direction within the toroidal chamber, and an annular thrust plate intersecting the toroidal chamber. Said annular thrust plate is actuated in synchrony with the power shaft and has transverse openings sized to let the power piston and exhaust piston pass. The power piston has a valve-controlled aperture through which a compressed air and fuel explosive mixture is directed to an explosive mixture chamber located in the rotor during the compression stroke upstream the closed thrust plate, and the explosive mixture is transferred via a discharge port provided in the power piston from the explosive mixture chamber to a plurality of firing chambers each provided with a suitable ignition device, such as a spark plug, located downstream the closed thrust plate during the power stroke.

The provision of the valve-controlled aperture and the discharge port in the power piston, the explosive mixture chamber in the rotor, and the plurality of firing chambers associated to the toroidal chamber renders the rotary piston engine of US 1773635 A inefficient, complicated, and expensive.

### Disclosure of the invention

The present invention contributes to mitigate the above and other drawbacks providing a four stroke rotary piston engine essentially comprising a pair of toroidal chambers having a common axis of revolution, wherein one of said toroidal chambers is an intake/compression toroidal chamber in which the intake and compression strokes are performed and the other is a power/exhaust toroidal chamber in which the power and exhaust strokes are performed. The four stroke rotary piston engine further comprises a power shaft coaxial with said axis of revolution, an intake/compression piston attached to said power shaft and arranged to move in consecutive complete turns in one direction about the axis of revolution within said intake/compression toroidal chamber and a power/exhaust piston attached to the power shaft and arranged to move in consecutive complete turns in said one direction about the axis of revolution within said power/exhaust toroidal chamber.

An intake/compression thrust plate is arranged and actuated to close and open the intake/compression toroidal chamber in coordination with the movement of the intake/compression piston and a power/exhaust thrust plate is arranged and actuated to close and open the power/exhaust toroidal chamber in coordination with the movement of the power/exhaust piston. When the pistons approach the respective thrust plates these latter "open" to let the pistons pass.

An air intake is arranged to feed air into the toroidal chamber downstream said intake/compression thrust plate when it is closed during the intake stroke. In most of cases no valve is necessary for the air intake. A partial vacuum is created between the closed intake/compression thrust plate and the intake/compression piston that moves away from it allowing air intake, and the fed air is compressed within the intake/compression toroidal chamber between the front side of the intake/compression piston and the closed intake/compression thrust plate during the compression stroke.

The intake/compression toroidal chamber has a transfer outlet located upstream said intake/compression thrust plate and adjacent thereto, and said transfer outlet is communicated via a transfer pipe with a transfer inlet provided in the power/exhaust toroidal chamber downstream said power/exhaust thrust plate and adjacent thereto. Compressed air is transferred through said transfer pipe from the intake/compression toroidal chamber to the power/exhaust toroidal chamber.

A fuel injector is provided in the power/exhaust toroidal chamber downstream the power/exhaust thrust plate and adjacent thereto. By means of said fuel injector, fuel is injected to the power/exhaust toroidal chamber and mixed with the transferred compressed air. Ignition means are provided for igniting the fuel and air mixture within the power/exhaust toroidal chamber between the rear side of the power/exhaust piston and the closed power/exhaust thrust plate to perform the power stroke.

Located in the power/exhaust toroidal chamber upstream the power/exhaust thrust plate and adjacent thereto there is an exhaust port through which the burnt fuel and air mixture is exhausted from the power/exhaust toroidal chamber during the exhaust stroke. In most of cases no valve is necessary for the exhaust port.

By the fact of having two toroidal chambers to perform the four strokes, transferring the compressed air from the intake/compression toroidal chamber to the power/exhaust toroidal chamber avoids the intake/compression piston having to reverse its rotation, which otherwise would occur if ignition takes place in the front side thereof where the compressed explosive mixture would be. Instead, the compressed air is transferred to the rear side of the power/exhaust piston and the ignition occurs between the rear side thereof and the power/exhaust thrust plate. This way the rotation of both pistons and hence of the power shaft is always in the same direction and without reversal, and the four strokes of the four stroke cycle are achieved in one revolution instead of two revolutions as occurs with the conventional reciprocating piston engines.

A transfer valve is preferably arranged in the transfer pipe for synchronizing the compressed air transfer with the movements of the intake/compression piston and power/exhaust piston. Said transfer valve can be of different types, for example a disc valve rotating with the power shaft, a solenoid actuated valve, or a no-return valve, among others.

In one embodiment of the present invention, the intake/compression thrust plate and the power/exhaust thrust plate are provided by a common annular rotating thrust plate mounted to rotate about an axis perpendicular to the axis of revolution. Said annular rotating thrust plate intersects the intake/compression toroidal chamber and the power/exhaust toroidal chamber and has at least one opening sized to let the intake/compression piston and the power/exhaust piston pass.

This annular rotating thrust plate is preferably housed in an annular sleeve casing, and thrust plate bearings are provided between said annular sleeve casing and the annular rotating thrust plate to reduce friction. The annular rotating thrust plate can be perfectly balanced.

Rotation of the annular rotating thrust plate is synchronized to rotation of the intake/compression piston and power/exhaust piston, and preferably mechanically synchronized to the power shaft. To this end, for example, the annular rotating thrust plate has a bevel gear connected to the power shaft by means of a gear train. If a single opening is provided in the annular rotating thrust plate, the total gear ratio of the gear transmission from the power shaft to the annular rotating thrust plate is 1:1, and accordingly the intake/compression piston and the power/exhaust piston are angularly offset from one another around the axis of revolution an angle equal to an angle at which the locations where the annular rotating thrust plate intersects the intake/compression toroidal chamber and the power/exhaust toroidal chamber are angularly offset from one another around the axis of the annular rotating thrust plate.

Preferably, the intake/compression toroidal chamber and the power/exhaust toroidal chamber are spaced apart at a distance so that when the passing hole in the annular rotating thrust plate is located between the two toroidal chambers both are closed by the annular rotating thrust plate. This moment is when the compressed air is transferred from the intake/compression toroidal chamber to the power/exhaust toroidal chamber through the transfer pipe.

In several alternative embodiments, the intake/compression thrust plate and the power/exhaust thrust plate are provided by respective reciprocating sliding thrust plates which are independently actuated, for example electro-pneumatically, under control means on the basis of control signals received from one or more position sensors arranged to detect the angular position of the power shaft or connecting discs which corresponds to the angular positions of the intake/compression piston and the power/exhaust piston within the respective intake/compression toroidal chamber and power/exhaust toroidal chamber in order to synchronize opening and closing of said reciprocating sliding thrust plates with the movements of the intake/compression piston and power/exhaust piston.

These reciprocating sliding thrust plates embodying the intake/compression thrust plate and the power/exhaust thrust plate can be low mass and low friction reciprocating sliding thrust plates to minimize power loss and vibrations.

In the embodiment provided with the annular rotating thrust plate the intake/compression toroidal chamber and the power/exhaust toroidal chamber need to have the same diameter and the same volume. However, in the embodiments provided with reciprocating sliding thrust plates the intake/compression toroidal chamber can have a greater volume than the power/exhaust toroidal chamber in order to increase the compression ratio or to have a supercharging effect. The use of reciprocating sliding thrust plates also allows the intake/compression toroidal chamber and the power/exhaust toroidal chamber to be at any distance, for example adjacent, to one another and to have any angular offset, for example the most favourable, between the intake/compression piston and the power/exhaust piston.

In some embodiments the intake/compression toroidal chamber and power/exhaust toroidal chamber are spaced apart in the direction of the axis of revolution. In those cases the intake/compression piston and the power/exhaust piston are fixed to respective connecting discs attached to the power shaft. Each of said connecting discs has a peripheral region inserted in a circumferential slit formed in a wall of the corresponding intake/compression toroidal chamber and power/exhaust toroidal chamber. In order to avoid leakage sealing rings are arranged between each opposite edge of each circumferential slit and an opposite surface of the corresponding connecting disc.

These sealing rings can be for example metal sealing rings analogous to those used between the pistons and the cylinders in the reciprocating piston engines.

In some other embodiments the maximum diameter of the power/exhaust toroidal chamber is less than the minimum diameter of the intake/compression toroidal chamber, and the intake/compression toroidal chamber and power/exhaust toroidal chamber are arranged in a same plane. In this case, the intake/compression piston is fixed to the power/exhaust piston by a common connecting ring and the power/exhaust piston is fixed to a common connecting disc attached in turn to the power shaft. Said common connecting ring is inserted in circumferential slits formed in walls of the intake/compression toroidal chamber and power/exhaust toroidal chamber, respectively, and said common connecting disc has a peripheral region inserted in another circumferential slit formed in a wall of the power/exhaust toroidal chamber. Obviously, sealing rings are also arranged between each opposite face of the common connecting ring and the common connecting disc and the opposite edge of the corresponding slit.

In one particular embodiment where the intake/compression toroidal chamber and power/exhaust toroidal chamber are arranged in a same plane, the power/exhaust toroidal chamber is a half toroidal chamber and the power/exhaust piston has a semi-circular shape.

An alternative embodiment includes a pair of intake/compression toroidal chamber and power/exhaust toroidal chamber with a pair of annular rotating thrust plates arranged to open and close the intake/compression toroidal chamber and the power/exhaust toroidal chamber at diametrically opposite places, and with two diametrically opposite intake/compression pistons in the intake/compression toroidal chamber and two diametrically opposite power/exhaust pistons in the power/exhaust toroidal chamber attached to the common power shaft. This embodiment performs two simultaneous power strokes per revolution.

Another alternative embodiment comprises a pair of intake/compression toroidal chamber and power/exhaust toroidal chamber with a selected number of two or more sliding intake/compression thrust plates arranged to open and close the intake/compression toroidal chamber at an equal number of places regularly distributed around the axis of revolution, an equal number of sliding power/exhaust thrust plates arranged to open and close the power/exhaust toroidal chamber at an equal number of places regularly distributed around the axis of revolution, an equal number of intake/compression pistons in the intake/compression toroidal chamber attached to the common power shaft and regularly distributed around the axis of revolution, and an equal number of power/exhaust pistons in the power/exhaust toroidal chamber attached to the common power shaft and regularly distributed around the axis of revolution. This embodiment performs the selected number of simultaneous power strokes per revolution.

In these embodiments having multiple pistons per toroidal chamber an air intake is provided downstream each intake/compression thrust plate and adjacent thereto, a transfer pipe is provided communicating a transfer outlet of the intake/compression toroidal chamber located upstream each intake/compression thrust plate and adjacent thereto with a transfer inlet of the power/exhaust toroidal chamber located downstream each corresponding power/exhaust thrust plate and adjacent thereto, a fuel injector and corresponding ignition means located downstream each corresponding power/exhaust thrust plate and adjacent thereto, and an exhaust port located upstream each power/exhaust thrust plate and adjacent thereto.

In still another embodiment, two or more rotary engine units of the present invention, each having a pair of intake/compression toroidal chamber and power/exhaust toroidal chamber having either one or more respective pistons and one or more respective sliding thrust plates, are arranged in parallel with all the pistons attached to a common power shaft, thus increasing the number of consecutive power strokes per revolution with enhanced power and smoothness.

Optionally, in any of the embodiments described above, the burnt fuel and air mixture exhausted from the power/exhaust toroidal chamber through the one or more exhaust ports can be routed to a turbine connected directly to the power shaft to utilize the residual energy left in the exhaust. A turbine may not be necessary if most of the energy is expended within the power/exhaust toroidal chamber.

The rotary piston engine according to any embodiment of the present invention can run an Otto cycle or a Diesel cycle. For the Otto cycle the ignition means comprise a spark plug located in the power/exhaust toroidal chamber downstream the power/exhaust thrust plate and adjacent thereto or downstream each power/exhaust thrust plate and adjacent thereto. For the Diesel cycle the ignition means comprise a high pressure fuel injector in combination with a high compression ratio arranged to ignite the explosive mixture downstream the power/exhaust thrust plate and adjacent thereto or downstream each power/exhaust thrust plate and adjacent thereto.

It is to be understood, however, that alternative gaseous fuels, such as hydrogen, methane, butane and other hydrocarbons derived from petroleum or not, and in general any alternative fuel that will need compressed air to be in the explosive mixture can be used with the four stroke rotary piston engine of the present invention.

The rotary piston engine according to any embodiment of the present invention will comprise a motor block made of multiple cast bodies assembled together including water jackets, cooling fins, bearing seats, lubrication channels, structural thicknesses, structural webs, etc. as usual in internal combustion engines.

In summary, some of the advantages of the four stroke rotary piston engine according to the present invention are the following:
The rotary pistons, the connecting discs, the power shaft and the annular rotating thrust plate can be perfectly balanced eliminating reciprocating mass and reducing friction.

Intake valves and exhaust valves may not be necessary and the transfer valve could be a solenoid actuated valve, a rotating disc valve, or simply a no-return valve, again reducing reciprocating mass and reducing friction.

Pistons are located on the axis of the toroidal chambers by their bearings and are not "slopping" around "loosely" as in a conventional reciprocating piston and cylinder, thus reducing friction and wear, enabling a reduced height/depth of the pistons, and simplifying the action of the connecting disc sealing rings.

Power strokes can last for more than 145° as pistons are not connected via a connecting rod to a crank-shaft, enabling greater overlap of power strokes with multi cylinder configurations and requiring less flywheel inertia.

Less transmission gears would be necessary as power delivery would be similar to an electric motor.

The motor's "breathing" would not be as restricted as in reciprocating piston engines resulting in an increased torque band.

### Brief description of the drawings

The above and other features and advantages will be more apparent from the following detailed description of exemplary embodiments with reference to the attached drawings, in which:
Fig. 1 is a diagrammatic partially sectioned perspective view of a four stroke rotary piston engine according to a first embodiment of the present invention including an annular rotating thrust plate;
Fig. 2 is a diagrammatic cross-sectional view taken from a mid-plane perpendicular to a rotating axis of the annular rotating thrust plate of the engine of Fig. 1;
Fig. 3A is a diagrammatic cross-sectional view taken from the plane IIIa-IIIa of Fig. 2;
Fig. 3B is a diagrammatic cross-sectional view taken from the plane IIIb-IIIb of Fig. 2;
Fig. 4 is a diagrammatic side view of the engine of Fig. 1 illustrating a gear train driving the annular rotating thrust plate;
Fig. 5 is a magnified detail of Fig. 2 illustrating sealing rings;
Fig. 6 is a diagram illustrating the four stroke cycle with the rotary piston engine according to the first embodiment of Figs. 1 to 5;
Fig. 7 is a diagrammatic cross-sectional view of a four stroke rotary piston engine according to a second embodiment of the present invention including sliding thrust plates with the latter in a closed position;
Fig. 8 is a diagrammatic cross-sectional view of the engine of Fig. 7 with the sliding thrust plates in an opened position;
Fig. 9A is a diagrammatic cross-sectional view taken from the plane IXa-IXa of Fig. 8;
Fig. 9B is a diagrammatic cross-sectional view taken from the plane IXb-IXb of Fig. 8;
Fig. 10 is a diagram illustrating the four stroke cycle with the rotary piston engine according to the second embodiment of Figs. 7 to 9B;
Fig. 11 is a diagrammatic cross-sectional view of a four stroke rotary piston engine according to a third embodiment of the present invention including sliding thrust plates;
Fig. 12 is a diagrammatic cross-sectional view taken from the plane XII-XII of Fig. 11;
Fig. 13 is a diagram illustrating the four stroke cycle with the rotary piston engine according to the third embodiment of Figs. 11 and 12;
Fig. 14 is a diagrammatic cross-sectional view of a four stroke rotary piston engine according to a fourth embodiment of the present invention including sliding thrust plates;
Fig. 15 is a diagrammatic cross-sectional view taken from the plane XV-XV of Fig. 14;
Fig. 16 is a diagram illustrating the four stroke cycle with the rotary piston engine according to the fourth embodiment of Figs. 14 and 15;
Fig. 17 is a diagrammatic cross-sectional view of a four stroke rotary piston engine according to a fifth embodiment of the present invention including sliding thrust plates;
Fig. 18 is a diagrammatic cross-sectional view taken from the plane XVIII-XVIII of Fig. 14;
Fig. 19 is a diagrammatic cross-sectional view of a four stroke rotary piston engine according to a sixth embodiment of the present invention including sliding thrust plates;
Fig. 20 is a diagrammatic cross-sectional view taken from a plane parallel to the axis of revolution of a four stroke rotary piston engine according to a variant of the first embodiment including two pistons per toroidal chamber and two annular rotating thrust plates;
Fig. 21 is a diagrammatic cross-sectional view taken from the plane XXI-XXI of Fig. 20;
Fig. 22 is a diagrammatic cross-sectional view taken from a plane perpendicular to the axis of revolution of a variant of the fifth embodiment including four pistons and four sliding thrust plates per toroidal chamber;
Fig. 23 is a diagrammatic cross-sectional view taken from a plane parallel to the axis of revolution of a variant of the second embodiment including three pairs of toroidal chambers;
Fig. 24 is a side end view of the engine of Fig. 23;
Fig. 25 is a diagrammatic cross-sectional view taken from a plane parallel to the axis of revolution of a variant of the first embodiment including a turbine fed from exhaust;
Fig. 26 is a diagrammatic cross-sectional view taken from a plane parallel to the axis of revolution of a variant of the second embodiment including a turbine fed from exhaust;
Fig. 27 is a diagrammatic cross-sectional view taken from a plane parallel to the axis of revolution of a variant of the third embodiment including a turbine fed from exhaust;
Fig. 28 is a diagrammatic cross-sectional view taken from a plane parallel to the axis of revolution of a variant of the fourth embodiment including a turbine fed from exhaust;
Fig. 29 is a diagrammatic cross-sectional view taken from a plane parallel to the axis of revolution of a variant of the fifth embodiment including a turbine fed from exhaust;

### Detailed description of exemplary embodiments

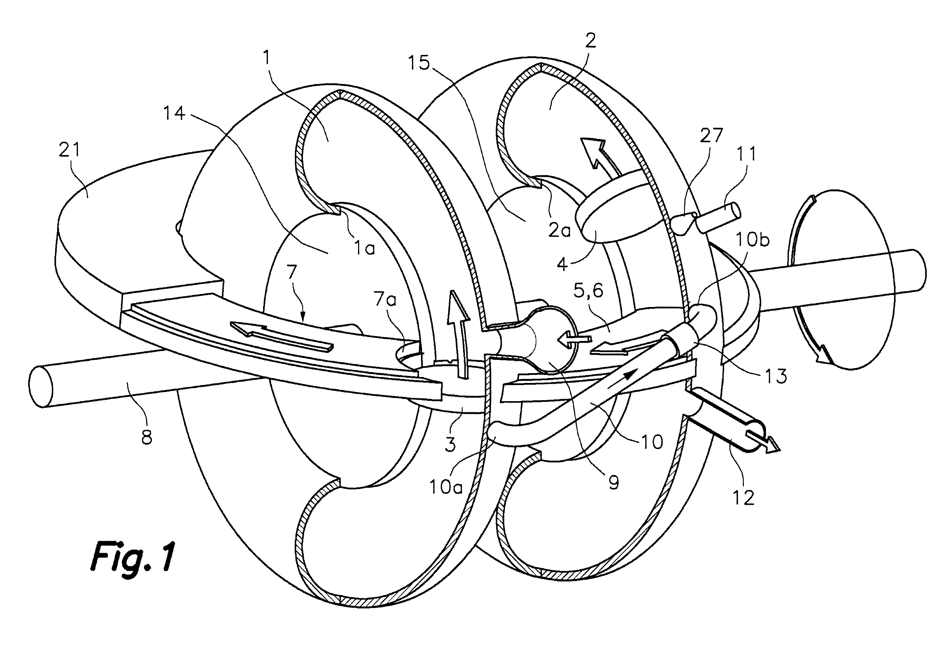

Referring first to Figs. 1 to 5, there is shown a four stroke rotary piston engine according to a first embodiment of the present invention comprising two similar toroidal chambers having a same axis of revolution. One of said toroidal chambers is an intake/compression toroidal chamber 1 where intake and compression strokes occur and the other is a power/exhaust toroidal chamber 2 where power and exhaust strokes occur. The intake/compression toroidal chamber 1 and the power/exhaust toroidal chamber 2 are defined by stationary walls.

A power shaft 8 is provided coaxial with said axis of revolution and one intake/compression piston 3 and one a power/exhaust piston 4 are rigidly fixed to respective connecting discs 14, 15 which in turn are rigidly attached to the power shaft 8. The intake/compression piston 3 is arranged to move in consecutive complete turns in one direction about the axis of revolution within the intake/compression toroidal chamber 1 and the power/exhaust piston 4 is arranged to move in consecutive complete turns in said one direction about the axis of revolution within the power/exhaust toroidal chamber 2. Thus, the power shaft 8, the intake/compression piston 3 and the power/exhaust piston 4 rotate together.

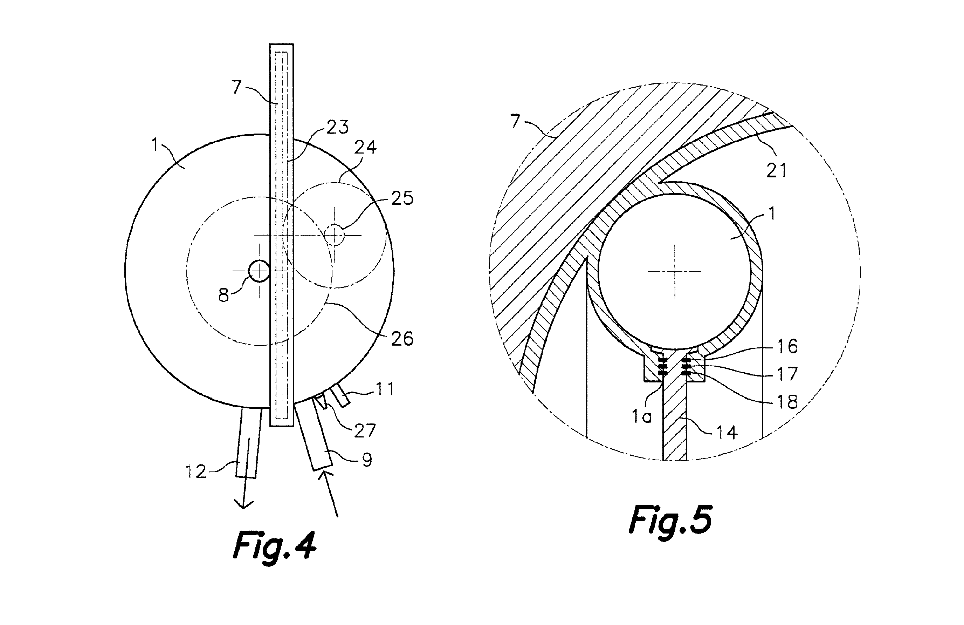

Each of said connecting discs 14, 15 has a peripheral region inserted in a circumferential slit 1a, 2a formed in said wall of the corresponding intake/compression toroidal chamber 1 and power/exhaust toroidal chamber 2. Sealing rings 16, 17, 18 are arranged between each opposite edge of each circumferential slit 1a, 2a and an opposite surface of the corresponding connecting disc 14, 15. In the example shown in Fig. 4, there is a compression sealing ring 16 located next to the toroidal chamber, followed by an intermediate sealing ring 17 and an oil controlling sealing ring 18. Although not shown, piston sealing rings are also included to provide seal between the pistons and the walls of the respective toroidal chambers.

An intake/compression thrust plate 5 and a power/exhaust thrust plate 6, which in this first embodiment are provided by a common annular rotating thrust plate 7, are actuated to close and open the intake/compression toroidal chamber 1 and the power/exhaust toroidal chamber 2 in coordination with the movement of the power shaft 8 and therefore of the intake/compression piston 3 and power/exhaust piston 4.

Said annular rotating thrust plate 7 is mounted to rotate about an axis perpendicular to the axis of revolution and intersects the intake/compression toroidal chamber 1 and the power/exhaust toroidal chamber 2. The annular rotating thrust plate 7 has one opening 7a to let the intake/compression piston 3 and the power/exhaust piston 4 pass. Thus, the common annular rotating thrust plate 7 upon rotating consecutively closes and opens both intake/compression toroidal chamber 1 and power/exhaust toroidal chamber 2 performing the functions of said intake/compression thrust plate 5 and said power/exhaust thrust plate 6.

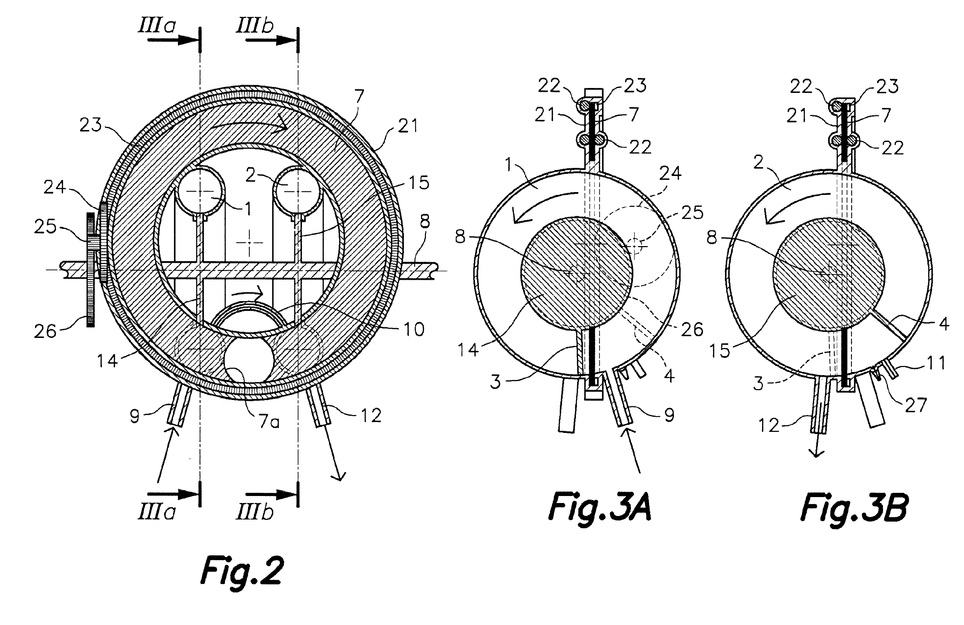

As better shown in Figs. 1, 3A and 3B, an annular sleeve casing 21 attached to the walls of the toroidal chambers is provided in which the annular rotating thrust plate 7 is housed. Thrust plate bearings 22 are arranged between said annular sleeve casing 21 and the annular rotating thrust plate 7 in order to minimize friction during rotation.

As shown in Figs. 2 to 4, the annular rotating thrust plate 7 has a bevel gear 23 meshed with a first gear wheel 24 which rotates together with a pinion 25 which in turn is meshed with a second gear wheel 26 rigidly attached to the power shaft 8. Thus, the rotation of the annular rotating thrust plate 7 is mechanically synchronized to the rotation of the power shaft 8 and of the intake/compression piston 3 and power/exhaust piston 4 by the described gear train 23, 24, 25, 26.

An air intake 9 is provided in the intake/compression toroidal chamber 1 downstream the intersection with the annular rotating thrust plate 7 and adjacent thereto, so that air fed to the intake/compression toroidal chamber 1 through said intake 9 is compressed between the front side of the intake/compression piston 3 and the annular rotating thrust plate 7 within the intake/compression toroidal chamber.

The intake/compression toroidal chamber 1 has a transfer outlet 10a located upstream the intersection with the annular rotating thrust plate 7 and adjacent thereto, and the power/exhaust toroidal chamber 2 has a transfer inlet 10b located downstream the intersection with the annular rotating thrust plate 7 and adjacent thereto. A transfer pipe 10 is provided communicating said transfer outlet 10a of the intake/compression toroidal chamber 1 with said transfer inlet 10b of the power/exhaust toroidal chamber 2, so that the compressed air is transferred through said transfer pipe 10 from the intake/compression toroidal chamber 1 to the power/exhaust toroidal chamber 2.

A transfer valve 13 is provided in the transfer pipe 10. Said transfer valve 13, which can be for example a rotating disc valve rotating with the power shaft 8 and cutting through the transfer pipe 10, a solenoid actuated valve or a simple no-return valve, synchronizes the compressed air transfer with the movements of the power shaft 8 and therefore of the intake/compression piston 3 and power/exhaust piston 4.

The power/exhaust toroidal chamber 2 includes a fuel injector 11 and a spark plug 27 located downstream the intersection with the annular rotating thrust plate 7 and adjacent thereto. By means of said fuel injector 11 fuel is injected to the power/exhaust toroidal chamber 2 and mixed with the compressed air between the rear side of the power/exhaust piston 4 and the annular rotating thrust plate 7, and by means of said spark plug 27 the explosive fuel and air mixture is ignited within the power/exhaust toroidal chamber 2 between the rear side of the power/exhaust piston 4 and the annular rotating thrust plate 7. The increase in volume of the fuel and air mixture upon burning thrusts the power/exhaust piston 4 forwards.

The mentioned spark plug 27 is used as ignition means when the engine is configured to perform an Otto cycle. However, when the engine is configured to perform a Diesel cycle alternative ignition means such as a high pressure fuel injector in combination with a higher compression ratio to ignite the explosive mixture are used.

The power/exhaust toroidal chamber 2 further comprises an exhaust port 12 located upstream the intersection with the annular rotating thrust plate 7 and adjacent thereto. The burnt fuel and air mixture is pushed and exhausted from the power/exhaust toroidal chamber 2 by the front side of the power/exhaust piston 4 through said exhaust port 12 when the power/exhaust piston 4 is thrust forwards in the next power cycle.

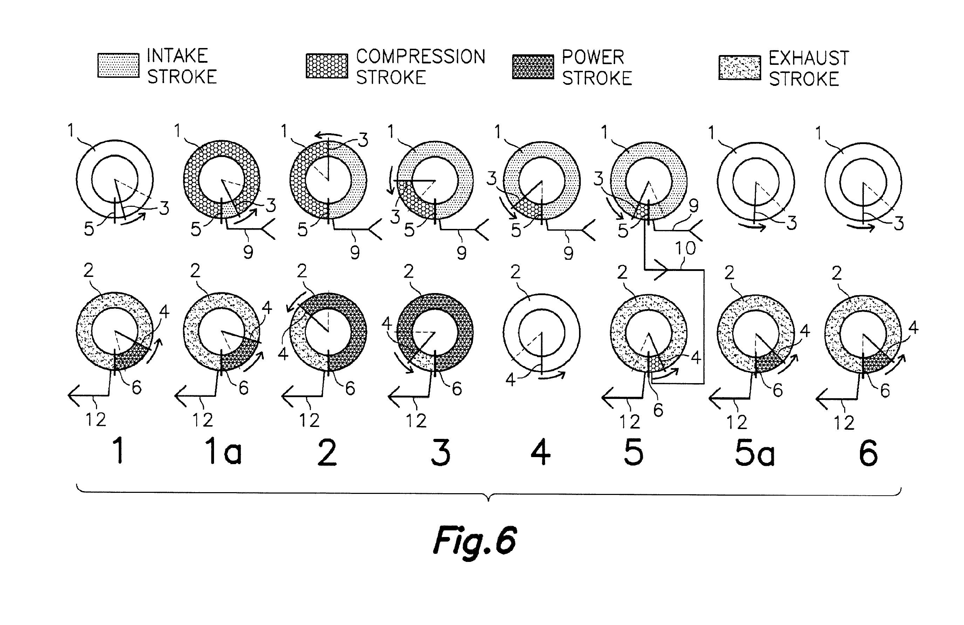

Fig. 6 illustrates the four stroke cycle with the rotary piston engine according to the first embodiment shown in Figs. 1 to 5. Consecutive steps of the four stroke cycle numbered 1 to 6 are shown from left to right in Fig. 6, with the conditions in the intake/compression toroidal chamber 1 shown at the top and the corresponding conditions in the power/exhaust toroidal chamber 2 shown at the bottom for each step. The positions of the intake/compression piston 3 are shown in solid lines and the relative positions of the power/exhaust piston 4 are shown in dashed lines in the intake/compression toroidal chamber 1. Inversely, the positions of the power/exhaust piston 4 are shown in solid lines and the relative positions of the intake/compression piston 3 are shown in dashed lines in the power/exhaust toroidal chamber 2.

### Steps 1 and 1 a:

In the intake/compression toroidal chamber 1, the intake/compression thrust plate 5 is closed. The intake/compression piston 3 is about 15°-26° past the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about 63°-74° past the closed power/exhaust thrust plate 6. Behind the power/exhaust piston 4 approximately 46° of the power stroke of a previous cycle is performed. In front of the power/exhaust piston 4 burnt mixture of a cycle before the previous cycle is exhausted through the exhaust port 12.

### Step 2:

In the intake/compression toroidal chamber 1, the intake/compression thrust plate 5 is closed. The intake/compression piston 3 is diametrically opposite to the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about 228° past the closed power/exhaust thrust plate 6. Behind the power/exhaust piston 4 the power stroke of the previous cycle is performed. In front of the power/exhaust piston 4 burnt mixture of the cycle before the previous cycle is exhausted through the exhaust port 12.

### Step 3:

In the intake/compression toroidal chamber 1, the intake/compression thrust plate 5 is closed. The intake/compression piston 3 is about 270° past the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about 318° past the closed power/exhaust thrust plate 6. Behind the power/exhaust piston 4 the power stroke of the previous cycle is performed. In front of the power/exhaust piston 4 burnt mixture of the cycle before the previous cycle is exhausted through the exhaust port 12.

### Step 4:

In the intake/compression toroidal chamber 1, the intake/compression thrust plate 5 is closed. The intake/compression piston 3 is about 312° past the closed intake/compression thrust plate 5 (about 48° to arrive there). In front of the intake/compression piston 3 air is compressed. Behind the intake/compression piston 3 air is admitted through the air intake 9.

In the power/exhaust toroidal chamber 2, the power/exhaust thrust plate 6 is open. The power/exhaust piston 4 is passing through the open power/exhaust thrust plate 6. Power and exhaust strokes of the previous cycles are terminated.

### Step 5:

In the intake/compression toroidal chamber 1, the intake/compression thrust plate 5 is closed. The intake/compression piston 3 is about 24° to arrive at the closed intake/compression thrust plate 5. In front of the intake/compression piston 3 maximal compression is achieved and compressed air is transferred to the power/exhaust toroidal chamber 2 through the transfer pipe 10. Behind the intake/compression piston 3 air continues being admitted.

In the power/exhaust toroidal chamber 2, the power/exhaust thrust plate 6 is closed. The power/exhaust piston 4 is about 24° past the closed power/exhaust thrust plate 6. Behind the power/exhaust piston 4 compressed air transferred from the intake/compression toroidal chamber 1 is received through the transfer pipe 10. In front of the power/exhaust piston 4 burnt mixture of the previous cycle begins being exhausted.

The annular rotating thrust plate 7 (making the functions of the intake/compression and power/exhaust thrust plates 5, 6) is closed for both intake/compression and power/exhaust toroidal chambers 1, 2. The passing hole 7a in the annular rotating thrust plate 7 is between the two intake/compression and power/exhaust toroidal chambers 1, 2 (see Fig. 2).

### Step 5a:

The annular rotating thrust plate 7 (making the functions of the intake/compression and power/exhaust thrust plates 5, 6) is about to open for the intake/compression toroidal chamber 1 allowing the intake/compression piston 3 to pass by.

In the power/exhaust toroidal chamber 2, the power/exhaust thrust plate 6 is closed. The power/exhaust piston 4 is about 45° past the closed power/exhaust thrust plate 6. Behind the power/exhaust piston 4 fuel is injected and mixed with the compressed air and the explosive mixture is ignited to start the power stroke. In front of the power/exhaust piston 4 the burnt mixture of the previous cycle continues being exhausted.

### Step 6:

In the intake/compression toroidal chamber 1, the intake/compression thrust plate 5 is open and the intake/compression piston 3 is passing through the open intake/compression thrust plate 5. Intake and compression strokes are terminated.

In the power/exhaust toroidal chamber 2, the power/exhaust thrust plate 6 is closed. The power/exhaust piston 4 is about 48° past the power/exhaust thrust plate 6. Behind the power/exhaust piston 4 the expansion of the exploded mixture performs the power stroke. In front of the power/exhaust piston 4 burnt mixture of the previous cycle continues being exhausted.

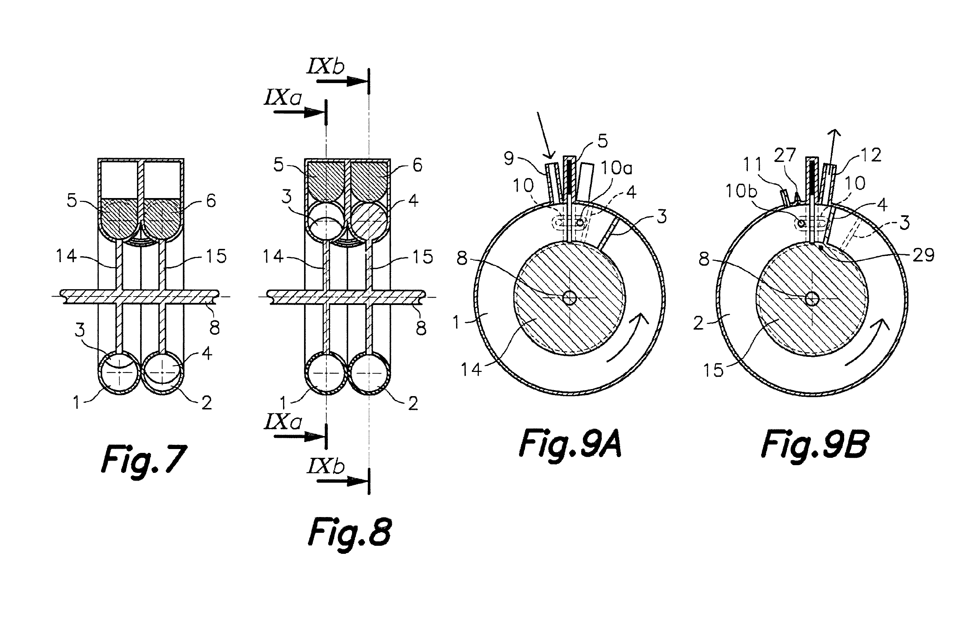

Figs 7 to 9B show a second embodiment of the present invention, which is analogous to the first embodiment with the exception that here the intake/compression thrust plate 5 and the power/exhaust thrust plate 6 are provided by respective reciprocating sliding thrust plates. The mentioned sliding intake/compression thrust plate 5 and sliding power/exhaust thrust plate 6 are independently actuated by electronically controllable actuators such as electro-pneumatic actuators (not shown). One position sensor 29 (Fig. 9B) is arranged to detect the angular position of the power/exhaust piston 4 within the power/exhaust toroidal chamber 2, for example via angular position of the power shaft 8 or of one of the connecting discs 14, 15, and control means (not shown) control the actuation of said electro-pneumatic actuators on the basis of control signals received from said position sensor in order to synchronize opening and closing of the intake/compression thrust plate 5 and power/exhaust thrust plate 6 with the movements of the intake/compression piston 3 and power/exhaust piston 4, respectively.

Since the power shaft 8, the intake/compression piston 3, the power/exhaust piston 4 and the respective connecting discs 14, 15 rotate together, one single position sensor 29 arranged to detect de angular position of any of them is enough, although alternatively more than one position sensor can be provided.

As shown in Figs. 7, 8, 9A and 9B, the intake/compression toroidal chamber 1 has the same volume than the power/exhaust toroidal chamber 2 and the intake/compression thrust plate 5 and the power/exhaust thrust plate 6 are located in one and the same plane including the axis of rotation, while the power/exhaust piston 4 is angularly offset an angle of about 18° forward from the intake/compression piston 3. The provision of individually actuated sliding thrust plates instead a common annular rotating thrust plate as the intake/compression thrust plate 5 and power/exhaust thrust plate 6 makes it possible for the intake/compression toroidal chamber 1 and the power/exhaust toroidal chamber 2 to be at any distance from one another, for example mutually adjacent and with its walls in contact.

The intake/compression piston 3 and the power/exhaust piston 4 are fixed to respective connecting discs 14, 15 which in turn are attached to the power shaft 8. The connecting discs 14, 15 are inserted in respective circumferential slits formed in walls of the intake/compression and power/exhaust toroidal chambers 1, 2. Seal is provided by sealing rings as in the first embodiment.

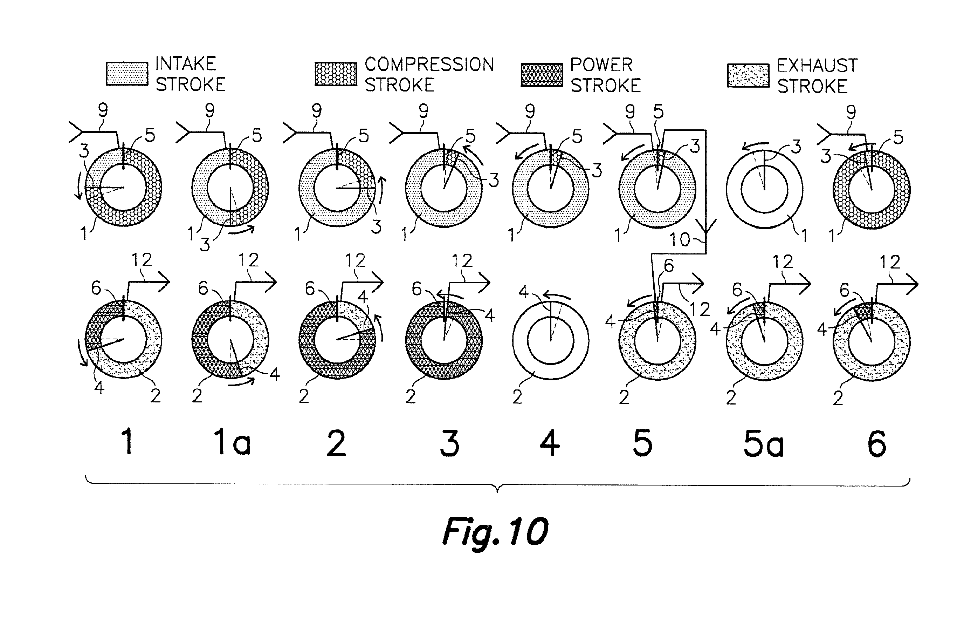

Fig. 10 illustrates the four stroke cycle with the rotary piston engine according to the second embodiment shown in Figs. 7 to 9B. Numeration of the consecutive steps of the four stroke cycle and the depiction of the several strokes and elements are as described above with reference to Fig. 6. The steps are the following.

### Steps 1 and 1a:

In the intake/compression toroidal chamber 1, the intake/compression thrust plate 5 is closed. The intake/compression piston 3 is about 90°-180° past the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about 108°-198° past the closed power/exhaust thrust plate 6. Behind the power/exhaust piston 4 the power stroke of a previous cycle is performed. In front of the power/exhaust piston 4 burnt mixture of a cycle before the previous cycle is exhausted through the exhaust port 12.

### Step 2:

In the intake/compression toroidal chamber 1, the intake/compression thrust plate 5 is closed. The intake/compression piston 3 is about 270° past the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about 288° past the closed power/exhaust thrust plate 6. Behind the power/exhaust piston 4 the power stroke of the previous cycle is performed. In front of the power/exhaust piston 4 burnt mixture of the cycle before the previous cycle is exhausted through the exhaust port 12.

### Step 3:

In the intake/compression toroidal chamber 1, the intake/compression thrust plate 5 is closed. The intake/compression piston 3 is about 24° to arrive to the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about to arrive to the closed power/exhaust thrust plate 6. Behind the power/exhaust piston 4 the power stroke of the previous cycle is ending. In front of the power/exhaust piston 4 burnt mixture of the cycle before the previous cycle is almost completely exhausted through the exhaust port 12.

### Step 4:

In the intake/compression toroidal chamber 1, the intake/compression thrust plate 5 is closed. The intake/compression piston 3 is about 18° to arrive to the closed intake/compression thrust plate 5. In front of the intake/compression piston 3 air is almost completely compressed. Behind the intake/compression piston 3 air is almost completely admitted through the air intake 9.

In the power/exhaust toroidal chamber 2, the power/exhaust thrust plate 6 is open. The power/exhaust piston 4 is passing through the open power/exhaust thrust plate 6. Power and exhaust strokes of the previous cycles are terminated.

### Step 5:

In the intake/compression toroidal chamber 1, the intake/compression thrust plate 5 is closed. The intake/compression piston 3 is about 12° to arrive at the closed intake/compression thrust plate 5. In front of the intake/compression piston 3 maximal compression is achieved and compressed air is transferred to the power/exhaust toroidal chamber 2 through the transfer pipe 10. Behind the intake/compression piston 3 air continues being admitted.

In the power/exhaust toroidal chamber 2, the power/exhaust thrust plate 6 is closed. The power/exhaust piston 4 is about 6° past the closed power/exhaust thrust plate 6. Behind the power/exhaust piston 4 compressed air transferred from the intake/compression toroidal chamber 1 is received through the transfer pipe 10. In front of the power/exhaust piston 4 burnt mixture of the previous cycle begins being exhausted.

### Step 5a:

In the intake/compression toroidal chamber 1, the intake/compression thrust plate 5 is open and the intake/compression piston 3 is passing through the open intake/compression thrust plate 5. Intake and compression strokes are terminated.

In the power/exhaust toroidal chamber 2, the power/exhaust thrust plate 6 is closed. The power/exhaust piston 4 is about 18° past the closed power/exhaust thrust plate 6. Behind the power/exhaust piston 4 fuel is injected and mixed with the compressed air and the explosive mixture is ignited to start the power stroke. In front of the power/exhaust piston 4 the burnt mixture of the previous cycle continues being exhausted.

### Step 6:

In the intake/compression toroidal chamber 1, the intake/compression thrust plate 5 is closed. The intake/compression piston 3 is about 11° past the closed intake/compression thrust plate 5. In front of the intake/compression piston 3 air is compressed. Behind the intake/compression piston 3 air for a next cycle is admitted through the air intake 9.

In the power/exhaust toroidal chamber 2, the power/exhaust thrust plate 6 is closed. The power/exhaust piston 4 is about 29° past the power/exhaust thrust plate 6. Behind the power/exhaust piston 4 the expansion of the exploded mixture performs the power stroke. In front of the power/exhaust piston 4 burnt mixture of the previous cycle continues being exhausted.

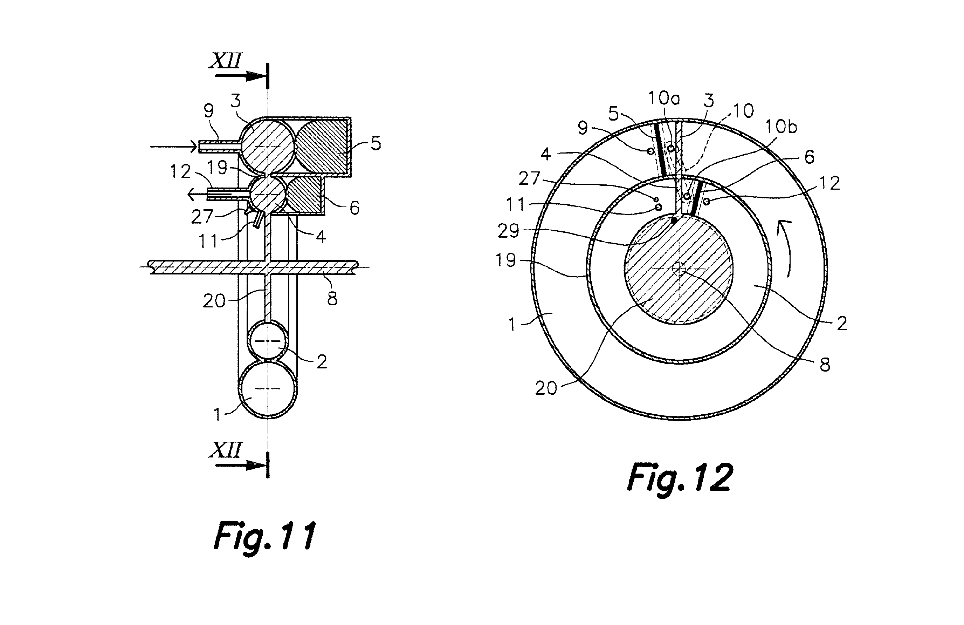

Figs. 11 and 12 show a third embodiment of the rotary piston engine of the present invention wherein intake/compression and power/exhaust thrust plates 5, 6 in the form of sliding thrust plates are provided to open and close the intake/compression and power/exhaust toroidal chambers 1, 2, respectively, as in the second embodiment. However, here the intake/compression toroidal chamber 1 has a greater volume than the power/exhaust toroidal chamber 2. More particularly, the outer diameter of the power/exhaust toroidal chamber 2 is lesser than the inner diameter of the intake/compression toroidal chamber 1 and the midlines thereof are in one and the same plane.

Consequently, the intake/compression piston 3 is fixed to the power/exhaust piston 4 by a common connecting ring 19 and the power/exhaust piston 4 is fixed to a common connecting disc 20 which in turn is attached to the power shaft 8. The common connecting ring 19 is inserted in circumferential slits formed in walls of the intake/compression toroidal chamber 1 and power/exhaust toroidal chamber 2 while said common connecting disc 20 is inserted in a circumferential slit formed in a wall of the power/exhaust toroidal chamber 2. Seal is provided by sealing rings arranged between opposite faces of said common connecting ring 19, opposite faces of said common connecting disc 20 and opposite edges of said slits in a similar way than the first embodiment.

As better shown in Fig. 12, in this third embodiments the intake/compression piston 3 and the power/exhaust piston 4 are coplanar and therefore the intake/compression thrust plate 5 is angularly offset an angle of about 23° forward from the power/exhaust thrust plate 6 around the axis of revolution. The intake/compression thrust plate 5 and the power/exhaust thrust plate 6 are independently actuated and controlled in a similar way than the second embodiment.

By providing the intake/compression toroidal chamber 1 with a greater volume than that of the power/exhaust toroidal chamber 2, an increase of the compression ratio and/or a supercharging effect is achieved. By arranging the intake/compression toroidal chamber 1 and the power/exhaust toroidal chamber 2 with their midlines in a common plane, a more compact design is achieved.

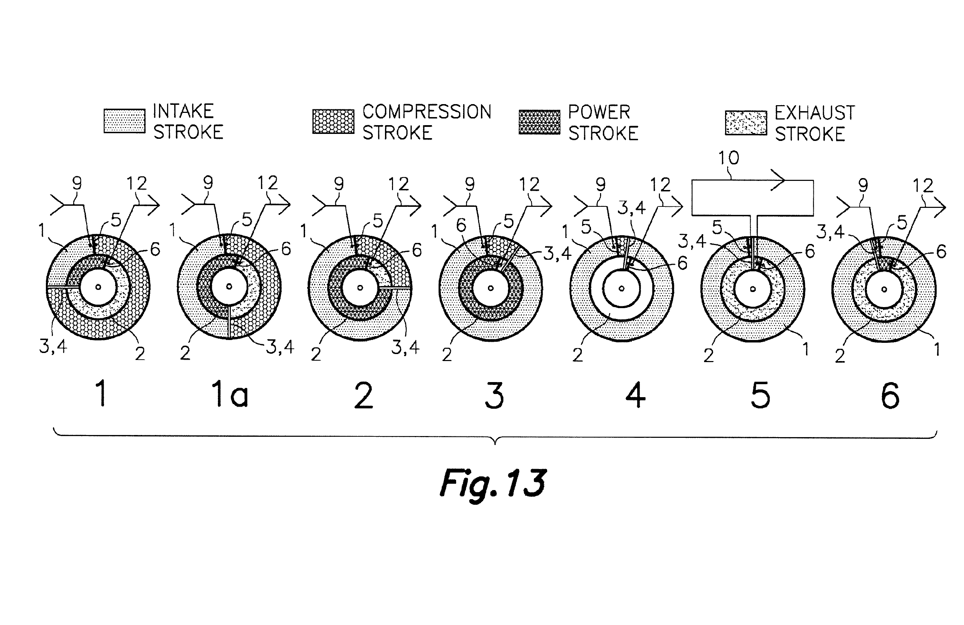

Fig. 13 illustrates the four stroke cycle with the rotary piston engine according to the third embodiment shown in Figs. 11 and 12. Numeration of the consecutive steps of the four stroke cycle and the depiction of the several strokes and elements are as described above with reference to Fig. 6. The steps are the following.

### Steps 1 and 1 a:

In the intake/compression toroidal chamber 1, the intake/compression thrust plate 5 is closed. The intake/compression piston 3 is about 84° to 174° past the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about 107° to 197° past the closed power/exhaust thrust plate 6. Behind the power/exhaust piston 4 the power stroke of a previous cycle is performed. In front of the power/exhaust piston 4 burnt mixture of a cycle before the previous cycle is exhausted through the exhaust port 12.

### Step 2:

In the intake/compression toroidal chamber 1, the intake/compression thrust plate 5 is closed. The intake/compression piston 3 is about 264° past the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about 287° past the closed power/exhaust thrust plate 6. Behind the power/exhaust piston 4 the power stroke of the previous cycle is performed. In front of the power/exhaust piston 4 burnt mixture of the cycle before the previous cycle is exhausted through the exhaust port 12.

### Step 3:

In the intake/compression toroidal chamber 1, the intake/compression thrust plate 5 is closed. The intake/compression piston 3 is about 41° to arrive to the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about to arrive to the closed power/exhaust thrust plate 6. Behind the power/exhaust piston 4 the power stroke of the previous cycle is ending. In front of the power/exhaust piston 4 burnt mixture of the cycle before the previous cycle is almost completely exhausted through the exhaust port 12.

### Step 4:

In the intake/compression toroidal chamber 1, the intake/compression thrust plate 5 is closed. The intake/compression piston 3 is about 14° to arrive to the closed intake/compression thrust plate 5. In front of the intake/compression piston 3 air is almost completely compressed. Behind the intake/compression piston 3 air is almost completely admitted through the air intake 9.

In the power/exhaust toroidal chamber 2, the power/exhaust thrust plate 6 is closed after having been open just the time to allow the power/exhaust piston 4 pass by. The power/exhaust piston 4 has just passed by the open power/exhaust thrust plate 6 which is again closed. Power and exhaust strokes of the previous cycles are terminated.

### Step 5:

In the intake/compression toroidal chamber 1, the intake/compression thrust plate 5 is closed. The intake/compression piston 3 is to about arrive at the closed intake/compression thrust plate 5. In front of the intake/compression piston 3 maximal compression is achieved and compressed air is transferred to the power/exhaust toroidal chamber 2 through the transfer pipe 10. Behind the intake/compression piston 3 air continues being admitted.

In the power/exhaust toroidal chamber 2, the power/exhaust thrust plate 6 is closed. The power/exhaust piston 4 is about 17° past the closed power/exhaust thrust plate 6. Behind the power/exhaust piston 4 compressed air transferred from the intake/compression toroidal chamber 1 is received through the transfer pipe 10. In front of the power/exhaust piston 4 burnt mixture of the previous cycle begins being exhausted.

### Step 6:

In the intake/compression toroidal chamber 1, the intake/compression thrust plate 5 is closed after having been open just the time to allow the intake/compression piston 3 pass by. The intake/compression piston 3 has just passed by the open intake/compression thrust plate 5 which is again closed. Intake and compression strokes are terminated. In front of the intake/compression piston 3 air is compressed. Behind the intake/compression piston 3 air for a next cycle is admitted through the air intake 9.

In the power/exhaust toroidal chamber 2, the power/exhaust thrust plate 6 is closed. The power/exhaust piston 4 is about 32° past the power/exhaust thrust plate 6. Behind the power/exhaust piston 4 fuel is injected and mixed with the compressed air and the explosive mixture is ignited so that expansion of the exploded mixture performs the power stroke. In front of the power/exhaust piston 4 the burnt mixture of the previous cycle continues being exhausted.

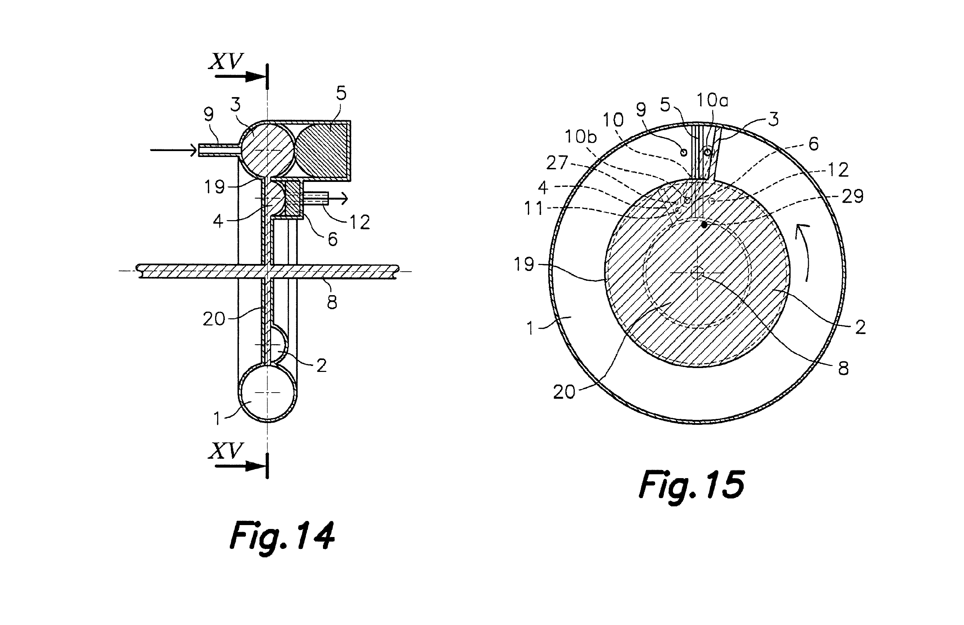

Figs 14 and 15 show a fourth embodiment of the rotary piston engine which is in general analogous to the third embodiment, where the intake/compression piston 3 is fixed to the power/exhaust piston 4 by a common connecting ring 19 and the power/exhaust piston 4 is fixed to a common connecting disc 20 which in turn is attached to the power shaft 8. However, here the power/exhaust toroidal chamber 2 is a half toroidal chamber and the power/exhaust piston 4 has a semi-circular shape. Another difference with respect to the third embodiment is that the intake/compression thrust plate 5 and the power/exhaust thrust plate 6 arranged in one and the same plane including the axis of revolution and the power/exhaust piston 4 is angularly offset an angle of about 32° forward from the intake/compression piston 3 around the axis of revolution. The intake/compression thrust plate 5 and the power/exhaust thrust plate 6 are independently actuated and controlled in a similar way than the second embodiment.

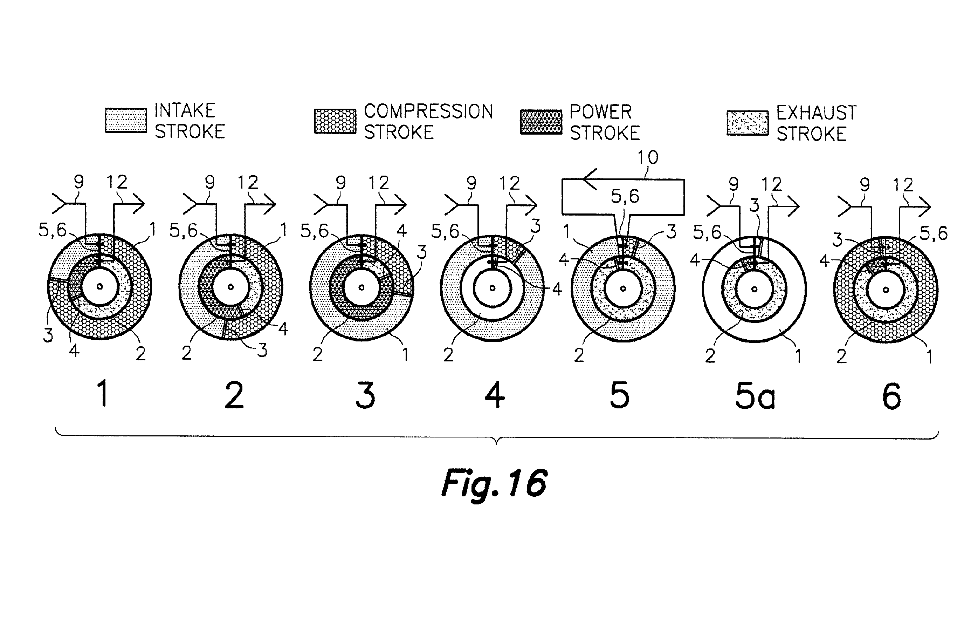

Fig. 16 illustrates the four stroke cycle with the rotary piston engine according to the forth embodiment shown in Figs. 14 and 15. Numeration of the consecutive steps of the four stroke cycle and the depiction of the several strokes and elements are as described above with reference to Fig. 6. The steps are the following.

### Step 1:

In the intake/compression toroidal chamber 1, the intake/compression thrust plate 5 is closed. The intake/compression piston 3 is about 82° past the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about 114° past the closed power/exhaust thrust plate 6. Behind the power/exhaust piston 4 the power stroke of a previous cycle is performed. In front of the power/exhaust piston 4 burnt mixture of a cycle before the previous cycle is exhausted through the exhaust port 12.

### Step 2:

In the intake/compression toroidal chamber 1, the intake/compression thrust plate 5 is closed. The intake/compression piston 3 is about 172° past the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about 204° past the closed power/exhaust thrust plate 6. Behind the power/exhaust piston 4 the power stroke of the previous cycle is performed. In front of the power/exhaust piston 4 burnt mixture of the cycle before the previous cycle is exhausted through the exhaust port 12.

### Step 3:

In the intake/compression toroidal chamber 1, the intake/compression thrust plate 5 is closed. The intake/compression piston 3 is about 98° to arrive to the closed intake/compression thrust plate 5. In front of the intake/compression piston 3 air is compressed. Behind the intake/compression piston 3 air is admitted through the air intake 9.

In the power/exhaust toroidal chamber 2, the power/exhaust thrust plate 6 is closed. The power/exhaust piston 4 is about 66° to arrive to the closed power/exhaust thrust plate 6. Behind the power/exhaust piston 4 the power stroke of the previous cycle is ending. In front of the power/exhaust piston 4 burnt mixture of the cycle before the previous cycle is almost completely exhausted through the exhaust port 12.

### Step 4:

In the intake/compression toroidal chamber 1, the intake/compression thrust plate 5 is closed. The intake/compression piston 3 is about 41° to arrive to the closed intake/compression thrust plate 5. In front of the intake/compression piston 3 air is almost completely compressed. Behind the intake/compression piston 3 air is almost completely admitted through the air intake 9.

In the power/exhaust toroidal chamber 2, the power/exhaust thrust plate 6 is closed but about to open to allow the power/exhaust piston 4 pass by. The power/exhaust piston 4 is about to arrive to the closed power/exhaust thrust plate 6 which is about to open. Power and exhaust strokes of the previous cycles are terminated.

### Step 5:

In the intake/compression toroidal chamber 1, the intake/compression thrust plate 5 is closed. The intake/compression piston 3 is about 17° to arrive at the closed intake/compression thrust plate 5. In front of the intake/compression piston 3 maximal compression is achieved and compressed air is transferred to the power/exhaust toroidal chamber 2 through the transfer pipe 10. Behind the intake/compression piston 3 air continues being admitted.

In the power/exhaust toroidal chamber 2, the power/exhaust thrust plate 6 is closed. The power/exhaust piston 4 has just passed the closed power/exhaust thrust plate 6, now closed. Behind the power/exhaust piston 4 compressed air transferred from the intake/compression toroidal chamber 1 is received through the transfer pipe 10. In front of the power/exhaust piston 4 burnt mixture of the previous cycle begins being exhausted.

### Step 5a:

In the intake/compression toroidal chamber 1, the intake/compression thrust plate 5 is closed but about to be opened to allow the intake/compression piston 3 pass by. The intake/compression piston 3 is about to arrive at the closed intake/compression thrust plate 5 which is about to open. Intake and compression strokes are terminated.

In the power/exhaust toroidal chamber 2, the power/exhaust thrust plate 6 is closed. The power/exhaust piston 4 is about 24° past the power/exhaust thrust plate 6. Behind the power/exhaust piston 4 fuel is injected and mixed with the compressed air and the explosive mixture is ignited so that expansion of the exploded mixture performs the power stroke. In front of the power/exhaust piston 4 the burnt mixture of the previous cycle continues being exhausted.

### Step 6:

In the intake/compression toroidal chamber 1, the intake/compression thrust plate 5 is closed after having been open just the time to allow the intake/compression piston 3 pass by. The intake/compression piston 3 has just passed by the open intake/compression thrust plate 5 which is again closed. In front of the intake/compression piston 3 air is compressed. Behind the intake/compression piston 3 air for a next cycle is admitted through the air intake 9.

In the power/exhaust toroidal chamber 2, the power/exhaust thrust plate 6 is closed. The power/exhaust piston 4 is about 39° past the power/exhaust thrust plate 6. Behind the power/exhaust piston 4 the power stroke is performed. In front of the power/exhaust piston 4 burnt mixture of the previous cycle exhausted through the exhaust port 12.

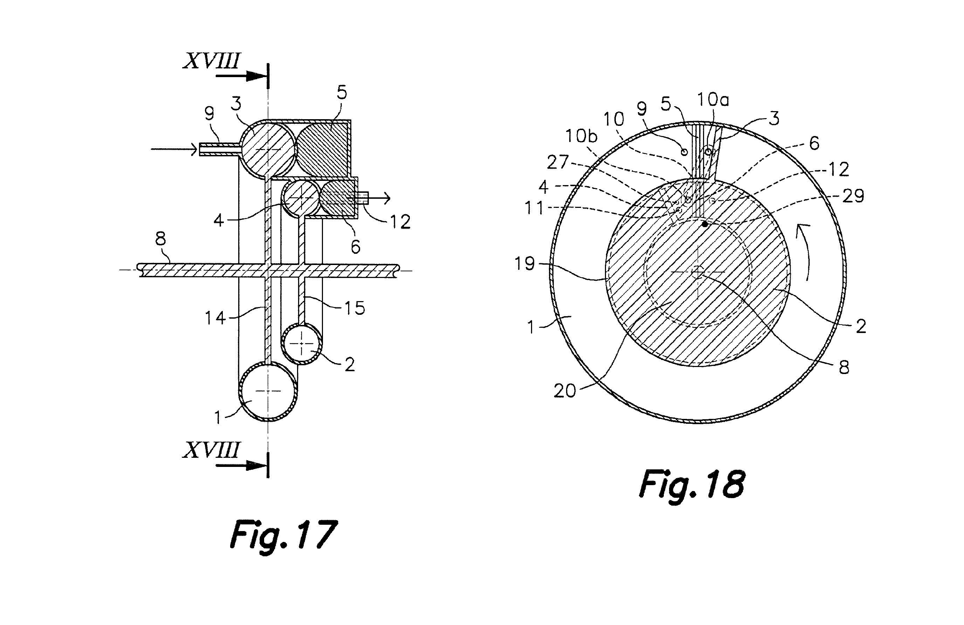

Figs 17 and 18 show a fifth embodiment of the rotary piston engine of the present invention wherein the intake/compression toroidal chamber 1 has a greater volume than the power/exhaust toroidal chamber 2 as in the third embodiment. However, the intake/compression toroidal chamber 1 is axially spaced apart from the power/exhaust toroidal chamber 2 and as a consequence the intake/compression piston 3 and the power/exhaust piston 4 are fixed to respective connecting discs 14, 15 attached to the power shaft 8 as in the second embodiment. Seal between the connecting discs 14, 15 and the corresponding intake/compression and power/exhaust toroidal chambers 1, 2 is provided by sealing rings as described above in relation to Fig. 5.

Here, the intake/compression thrust plate 5 and the power/exhaust thrust plate 6 are provided by respective reciprocating sliding thrust plates independently actuated and controlled as in the second embodiment. the intake/compression thrust plate 5 and the power/exhaust thrust plate 6 are located in one and the same plane including the axis of rotation, and the power/exhaust piston 4 is angularly offset an angle of about 32° forward from the intake/compression piston 3. The steps of the four stroke cycle of this fifth embodiment are similar to those described above for the fourth embodiment shown in Fig. 16.

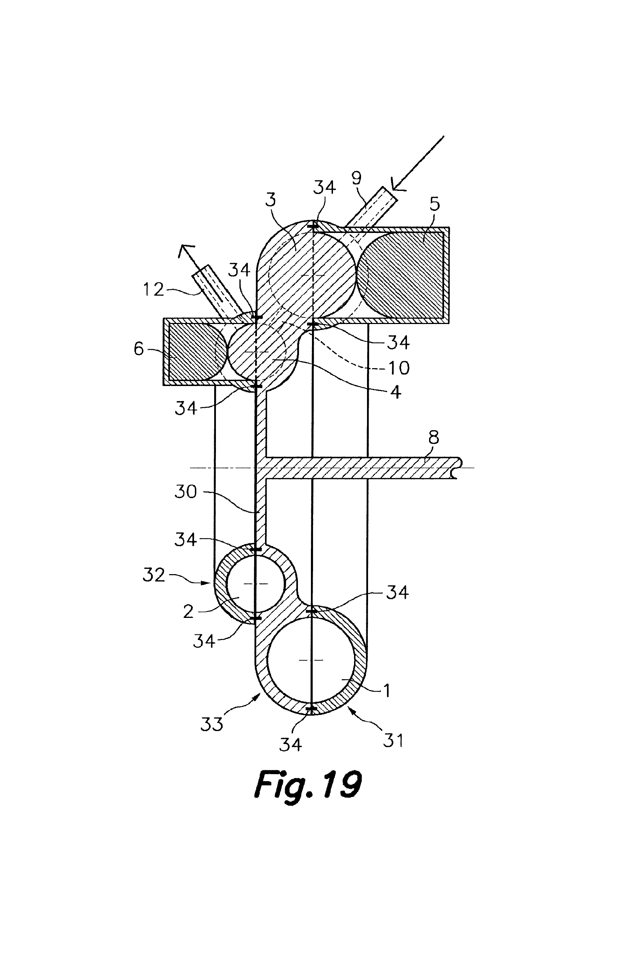

Fig. 19 shows a four stroke rotary piston engine according to a sixth embodiment of the present invention which is similar to the fifth embodiment except in that here an outer half of the intake/compression toroidal chamber 1 and an outer half of the power/exhaust toroidal chamber 2 are defined by walls of respective stationary first and second bodies 31, 32, while the inner halves of the intake/compression and power/exhaust toroidal chambers 1, 2 are defined by walls of a rotating intermediate third body 33 attached to the power shaft 8 via a connecting disk 30. The intake/compression piston 3 and the power/exhaust pistons 4 are attached to the third body 33, so that the inner halves of the intake/compression and power/exhaust toroidal chambers 1, 2 and the intake/compression and power/exhaust pistons 3, 4 rotate all together with the power shaft 8.

Chamber sealing rings 34 are arranged between opposite rims of the walls of the first, second and third bodies 31, 32, 33 defining the outer and inner halves of the intake/compression and power/exhaust toroidal chambers 1, 2. In this sixth embodiment, the intake/compression and power/exhaust thrust plates 5, 6 are provided by respective reciprocating sliding thrust plates independently actuated to open and close the intake/compression and power/exhaust toroidal chambers 1, 2 according to the rotation of the third body 32. The first body 31 comprises an air intake 9, the second body 32 comprises an exhaust port 12 and the third body 33 comprises an internal transfer pipe 10 whose functions are analogous than those described above.

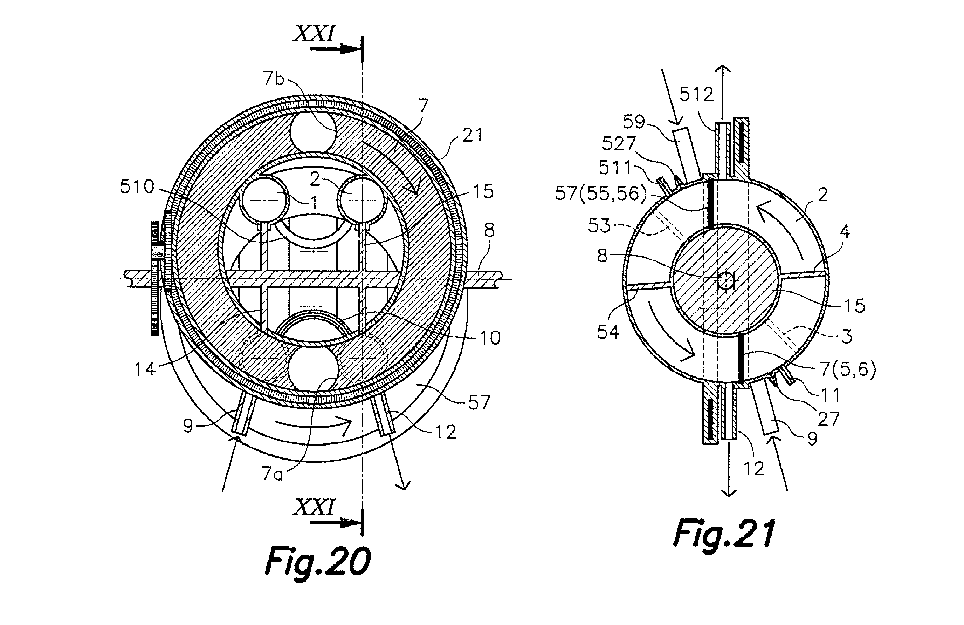

Figs. 20 and 21 show a the rotary piston engine according to a variant of the first embodiment, comprising one intake/compression toroidal chamber 1 and one power/exhaust toroidal chamber 2 having the same volume and sharing the same axis of revolution, which are spaced apart from one another at a certain distance, a power shaft 8 coaxial with the axis of revolution. Within the intake/compression toroidal chamber 1 there are diametrically opposite first and second intake/compression pistons 3, 53 fixed to a first connecting disc 14 attached to the power shaft 8 and within the power/exhaust toroidal chamber 2 there are diametrically opposite first and second power/exhaust pistons 4 fixed to a second connecting disc 15 attached to the power shaft 8.

First and second annular rotating thrust plates 7, 57 which rotate about respective axis perpendicular to the axis of revolution intersect the intake/compression and power/exhaust toroidal chambers 1, 2 at diametrically opposite locations thereof. Each of the first and second annular rotating thrust plates 7, 57 has two diametrically opposite passing holes 7a, 7b allowing the first and second intake/compression pistons 3, 53 and first and second power/exhaust pistons 4, 54 pass by. The first annular rotating thrust plate 7 carries out the functions of first intake/compression and power/exhaust thrust plates 5, 6 and the second annular rotating thrust plate 57 carries out the functions of second intake/compression and power/exhaust thrust plates 55, 56

The intake/compression toroidal chamber 1 has first and second air intakes 9, 59 downstream the intersection with the first and second annular rotating thrust plates 7, 57 and adjacent thereto, through which air is fed to the intake/compression toroidal chamber 1. The power/exhaust toroidal chamber 2 has first and second exhaust ports 12, 512 upstream the intersection with the first and second annular rotating thrust plates 7, 57 and adjacent thereto, through which the burnt fuel and air mixture is exhausted from the power/exhaust toroidal chamber 2.

The intake/compression toroidal chamber 1 has first and second transfer outlets located upstream the intersection with the respective first and second annular rotating thrust plates 7, 57 and adjacent thereto. The power/exhaust toroidal chamber 2 has first and second transfer inlets located downstream the intersections with the respective first and second annular rotating thrust plates 7, 57 and adjacent thereto. First and second transfer pipes 10, 510 are provided communicating the corresponding first or second transfer inlet with the corresponding first or second transfer outlet, so that compressed air is transferred through said first and second transfer pipes 10, 510 from the intake/compression toroidal chamber 1 to the power/exhaust toroidal chamber 2.

First and second fuel injectors are provided by which fuel is injected to the power/exhaust toroidal chamber 2 and mixed with the compressed air downstream the locations where the respective first and second annular rotating thrust plates 7, 57 intersect the power/exhaust toroidal chamber 2 and adjacent thereto. First and second ignition means are provided for igniting the fuel and air mixture within the power/exhaust toroidal chamber 2 downstream the locations where the respective first and second annular rotating thrust plates 7, 57 intersect the power/exhaust toroidal chamber 2 and adjacent thereto.

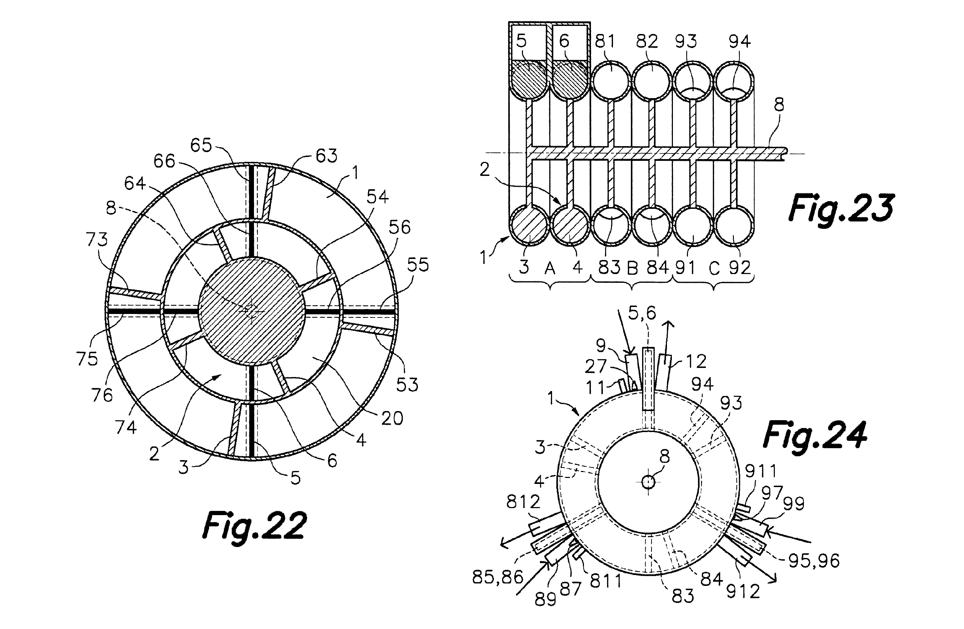

Fig. 22 illustrates a rotary piston engine according to a variation of the fifth embodiment including one intake/compression toroidal chamber 1 and one power/exhaust toroidal chamber 2 arranged around a power shaft 8 coaxial with the axis of revolution. Four intake/compression pistons 3, 53, 63, 73 are attached to the power shaft 8, distributed at regular angular intervals therearound and arranged to rotate in one direction within the intake/compression toroidal chamber 1 and four power/exhaust pistons 4, 54, 64, 74 are attached to the power shaft 8, distributed at regular angular intervals therearound, and arranged to move in the one direction within the power/exhaust toroidal chamber 2.

Four sliding intake/compression thrust plates 5, 55, 65, 75 are arranged and independently actuated to close and open the intake/compression toroidal chamber 1 at respective locations distributed at regular angular intervals around the axis of revolution and four power/exhaust thrust plates 6, 56, 66, 76 are arranged and independently actuated to close and open the power/exhaust toroidal chamber 2 at respective locations distributed at regular angular intervals around the axis of revolution.

Four air intakes (not shown) are provided downstream the intersection of the respective intake/compression thrust plates 5, 55, 65, 75 with the intake/compression toroidal chamber 1 and adjacent thereto, through which air is fed to the intake/compression toroidal chamber 1. Four exhaust ports (not shown) are provided upstream the intersection of the respective power/exhaust thrust plates 6, 56, 66, 76 with the power/exhaust toroidal chamber 2 and adjacent thereto, through which the burnt fuel and air mixture is exhausted from the power/exhaust toroidal chamber 2.

The intake/compression toroidal chamber 1 has four transfer outlets (not shown) located upstream the intersection with each intake/compression thrust plate 5, 55, 65, 75 and adjacent thereto and the power/exhaust toroidal chamber 2 has four transfer inlets (not shown) located downstream the intersection with each power/exhaust thrust plate 5, 56, 66, 76 and adjacent thereto. Four transfer pipes (not shown) are provided, each communicating one of said four transfer outlets with its corresponding transfer inlet. Compressed air is transferred through four transfer pipes from the intake/compression toroidal chamber 1 to the power/exhaust toroidal chamber 2.

Four fuel injectors are provided by which fuel is injected to the power/exhaust toroidal chamber 2 and mixed with the compressed air downstream the intersection with each power/exhaust thrust plate 5, 56, 66, 76 and adjacent thereto, and four ignition means are provided for igniting the fuel and air mixture within the power/exhaust toroidal chamber 2 downstream the intersection with each power/exhaust thrust plate 6, 56, 66, 76 and adjacent thereto.

Alternative embodiments similar to the one described above in relation with Fig. 22 but comprising any number greater than one of rotary pistons, sliding thrust plates, etc. per toroidal chamber and an equal number of transfer pipes will readily occur to a person skilled in the art, whatever is the arrangement and relative volume of the two toroidal chambers.

Figs. 23 and 24 show a rotary piston engine according to a variation of the second embodiment, which comprises three pairs A, B, C of intake/compression toroidal chamber and power/exhaust toroidal chamber 1, 2; 81, 82; 91, 92 sharing the same axis of revolution. All the intake/compression toroidal chambers 1, 81, 91 and the power/exhaust toroidal chambers 2, 82, 92 have the same volume and are adjacent to each other with their walls in contact. A power shaft 8 is located coaxially with said axis of revolution. Although all toroidal chambers in this case are equal in volume, the intake/compression toroidal chambers can be of larger volume than the power/exhaust toroidal chambers.

Three intake/compression pistons 3, 83, 93 are attached to said power shaft 8 distributed at regular angular intervals therearound, and each of said intake/compression pistons 3, 83, 93 is arranged to rotate in one direction about the axis of revolution within a corresponding one of said intake/compression toroidal chambers 1, 81, 91. Similarly, three power/exhaust pistons 4, 84, 94 are attached to the power shaft 8 distributed at regular angular intervals therearound, and each power/exhaust piston 4, 84, 94 is arranged to rotate in said one direction about the axis of revolution within a corresponding one of said power/exhaust toroidal chambers 2, 82, 92;

Three intake/compression thrust plates 5, 85, 95 are provided distributed at regular angular intervals around de axis of revolution, with each intake/compression thrust plate 5, 85, 95 being arranged and independently actuated to close and open a corresponding one of the three intake/compression toroidal chambers 1, 81, 91. Three power/exhaust thrust plates 6, 86, 96 are provided distributed at regular angular intervals around de axis of revolution, with each power/exhaust thrust plate 6, 86, 96 being arranged and independently actuated to close and open a corresponding one of the power/exhaust toroidal chambers 2, 82, 92.

One air intake 9, 89, 99 is provided in each intake/compression toroidal chamber 1, 81, 91 downstream the corresponding intake/compression thrust plate 5, 85, 95 and adjacent thereto, and one exhaust port 12, 812, 912 is provided in each power/exhaust toroidal chamber 2, 82, 92 upstream the corresponding power/exhaust thrust plate 6, 86, 96 and adjacent thereto.

Three transfer pipes (not shown) are provided, each communicating a transfer outlet of each intake/compression toroidal chamber 1, 81, 91 located upstream the corresponding intake/compression thrust plate 5, 85, 95 and adjacent thereto with a transfer inlet of the power/exhaust toroidal chamber 2, 82, 92 of the same pair A, B, C located downstream the corresponding power/exhaust thrust plate 6, 86, 96 and adjacent thereto. Compressed air is transferred through said transfer pipes from each additional intake/compression toroidal chamber 1, 81, 91 to the corresponding power/exhaust toroidal chamber 2, 82, 92 of the same pair.

Three fuel injectors 11, 811, 911 are provided by which fuel is injected to each power/exhaust toroidal chamber 2, 82, 92 and mixed with the compressed air downstream the corresponding additional power/exhaust thrust plate 6, 86, 96, and three ignition means, such as spark plugs 27, 87, 97 are provided, each located in one of the power/exhaust toroidal chambers 2, 82, 92 downstream the corresponding power/exhaust thrust plate 6 and adjacent thereto for igniting the fuel and air mixture within the power/exhaust toroidal chamber 2, 82, 92.

A person skilled in the art will readily understand in view of the embodiment previously described in relation to Figs. 23 and 24 in combination with the other embodiments and variants described above that many other alternative embodiments are possible including any number of pairs of toroidal chambers and any number of pistons, thrust plates, etc. per toroidal chamber, with the toroidal chambers of each pair having the same or different volume and being adjacent or more or less spaced apart. The more pairs of cylinders added, the more power pulses per revolution, making power delivery even smoother.

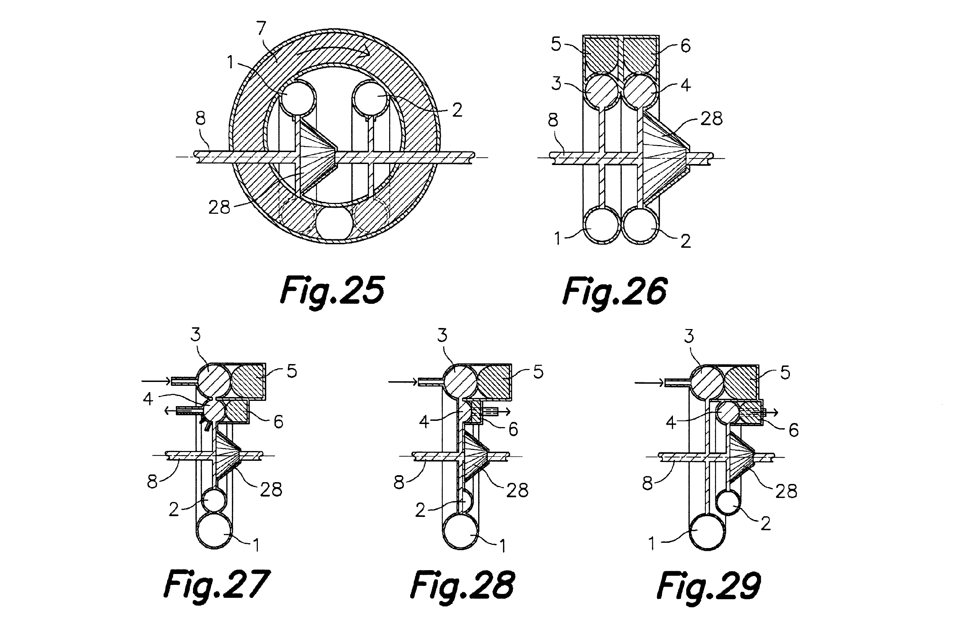

Figs. 25 to 29 show several embodiments of the rotary piston engine of the present invention having in common that a turbine 28 is connected to the power shaft 8, and that said turbine is fed with the burnt fuel and air mixture exhausted from the or each power/exhaust toroidal chamber through the or each exhaust port thereof.

The rotary piston engine of Fig. 25 is a variant of the first embodiment, where said turbine 28 is fed from the exhaust port 12 of the power/exhaust toroidal chamber 2.

The rotary piston engine of Fig. 26 is a variant of the second embodiment, where the turbine 28 is fed from the exhaust port 12 of the power/exhaust toroidal chamber 2.

The rotary piston engine of Fig. 27 is a variant of the third embodiment, where the turbine 28 is fed from the exhaust port 12 of the power/exhaust toroidal chamber 2.

The rotary piston engine of Fig. 28 is a variant of the fourth embodiment, where the turbine 28 is fed from the exhaust port 12 of the power/exhaust toroidal chamber 2.

The rotary piston engine of Fig. 29 is a variant of the fifth embodiment, where the turbine 28 is fed from the exhaust port 12 of the power/exhaust toroidal chamber 2.

A person skilled in the art will readily understand in view of the embodiments previously described in relation to Figs. 25 to 29 in combination with the other embodiments and variants described above that many other alternative embodiments are possible including any number of pairs of toroidal chambers and any number of pistons, thrust plates, etc. per toroidal chamber, with the toroidal chambers of each pair having the same or different volume and being adjacent or more or less spaced apart, and with a turbine 28 connected to the power shaft 8 and fed with the burnt fuel and air mixture exhausted from each power/exhaust toroidal chamber 2, 82, 92 through each exhaust port 12, 512, 812, 912 thereof.

The scope of the present invention is defined in the attached claims.

## Claims

1. A four stroke rotary piston engine comprising:
a toroidal chamber having an axis of revolution;
a power shaft (8) coaxial with said axis of revolution
a piston attached to said power shaft (8) and arranged to move in consecutive complete turns in one direction about the axis of revolution within said toroidal chamber;
a thrust plate actuated to close and open the toroidal chamber in coordination with the movement of said piston;
an air intake (9) through which air is fed to the toroidal chamber, the fed air being compressed between the piston and said thrust plate within the toroidal chamber,
**characterized in that** said toroidal chamber is an intake/compression toroidal chamber (1), said piston is an intake/compression piston (3), and said thrust plate is an intake/compression thrust plate (5), the four stroke rotary piston engine further comprising:
a power/exhaust toroidal chamber (2) having the same axis of revolution than said intake/compression toroidal chamber (1);
a power/exhaust piston (4) attached to said power shaft (8) and arranged to move in consecutive complete turns in said one direction about the axis of revolution within said power/exhaust toroidal chamber (2);
a power/exhaust thrust plate (6) actuated to close and open the power/exhaust toroidal chamber (2) in coordination with the movement of the power/exhaust piston (4);
a transfer pipe (10) communicating a transfer outlet (10a) of the intake/compression toroidal chamber (1) located upstream said intake/compression thrust plate (5) and adjacent thereto with a transfer inlet (10b) of the power/exhaust toroidal chamber (2) located downstream said power/exhaust thrust plate (6) and adjacent thereto, compressed air being transferred through said transfer pipe (10) from the intake/compression toroidal chamber (1) to the power/exhaust toroidal chamber (2);
a fuel injector (11) by which fuel is injected to the power/exhaust toroidal chamber (2) and mixed with the compressed air;
ignition means for igniting the fuel and air mixture within the power/exhaust toroidal chamber (2); and
an exhaust port (12) through which the burnt fuel and air mixture is exhausted from the power/exhaust toroidal chamber (2).

2. The four stroke rotary piston engine according to claim 1, **characterized in that** said air intake (9) is located in the intake/compression toroidal chamber (1) downstream the intake/compression thrust plate (5) and adjacent thereto, and said exhaust port (12) is located in the power/exhaust toroidal chamber (2) upstream the power/exhaust thrust plate (6) and adjacent thereto.

3. The four stroke rotary piston engine according to claim 2, **characterized in that** a transfer valve (13) synchronizing the compressed air transfer with the movements of the intake/compression piston (3) and power/exhaust piston (4) is arranged in the transfer pipe (10), said transfer valve (13) being selected from a group comprising a rotating disc valve, a solenoid actuated valve, and a no-return valve.

4. The four stroke rotary piston engine according to claim 1, 2 or 3, **characterized in that** the intake/compression thrust plate (5) and the power/exhaust thrust plate (6) are provided by a common annular rotating thrust plate (7) mounted to rotate about an axis perpendicular to the axis of revolution, said annular rotating thrust plate (7) intersecting the intake/compression toroidal chamber (1) and the power/exhaust toroidal chamber (2) and having at least one passing hole (7a) to let the intake/compression piston (3) and the power/exhaust piston (4) pass.

5. The four stroke rotary piston engine according to claim 4, **characterized in that** the annular rotating thrust plate (7) is housed in an annular sleeve casing (21), thrust plate bearings (22) being provided between said annular sleeve casing (21) and the annular rotating thrust plate (7), rotation of the annular rotating thrust plate (7) being mechanically synchronized to rotation of the power shaft (8) and intake/compression piston (3) and power/exhaust piston (4).

6. The four stroke rotary piston engine according to claim 1, 2 or 3, **characterized in that** the intake/compression thrust plate (5) and the power/exhaust thrust plate (6) are provided by respective independently actuated reciprocating sliding thrust plates, at least one position sensor (29) being arranged to synchronize opening and closing of said reciprocating sliding thrust plates with the movements of the intake/compression piston (3) and power/exhaust piston (4).

7. The four stroke rotary piston engine according to claim 6, **characterized in that** the intake/compression toroidal chamber (1) has a greater volume than the power/exhaust toroidal chamber (2).

8. The four stroke rotary piston engine according to any one of claims 4 to 7, **characterized in that** the intake/compression piston (3) and the power/exhaust piston (4) are fixed to respective connecting discs (14, 15) attached to the power shaft (8), each of said connecting discs (14, 15) having a peripheral region inserted in a circumferential slit (1a, 2a) formed in a wall of the corresponding intake/compression toroidal chamber (1) and power/exhaust toroidal chamber (2), sealing rings (16, 17, 18) being arranged between opposite edges of each circumferential slit (1a, 2a) and opposite surfaces of the corresponding connecting disc (14, 15).

9. The four stroke rotary piston engine according to claim 7, **characterized in that** the intake/compression piston (3) is fixed to the power/exhaust piston (4) by a common connecting ring (19) and the power/exhaust piston (4) is fixed to a common connecting disc (20) attached to the power shaft (8), said common connecting ring (19) being inserted in circumferential slits formed in walls of the intake/compression toroidal chamber (1) and power/exhaust toroidal chamber (2) and said common connecting disc (20) having a peripheral region inserted in a circumferential slit formed in a wall of the power/exhaust toroidal chamber (2), sealing rings being arranged between opposite faces of said common connecting ring (19) and common connecting disc (20) and opposite edges of said slits.

10. The four stroke rotary piston engine according to claim 9, **characterized in that** the power/exhaust toroidal chamber (2) is a half toroidal chamber and the power/exhaust piston (4) has a semi-circular shape.

11. The four stroke rotary piston engine according to claim 1, **characterized in that**:
a second intake/compression piston (53) is attached to the power shaft (8) at a position diametrically opposite to the first intake/compression piston (3) and arranged to move in the one direction within the intake/compression toroidal chamber (1);
a second power/exhaust piston (54) is attached to the power shaft (8) at a position diametrically opposite to the first power/exhaust piston (4) and arranged to move in the one direction within the power/exhaust toroidal chamber (2);
a second intake/compression thrust plate (55) is arranged and actuated to close and open the intake/compression toroidal chamber (1) at a position diametrically opposite to the first intake/compression thrust plate (5);
a second power/exhaust thrust plate (56) is arranged and actuated to close and open the power/exhaust toroidal chamber (2) at a position diametrically opposite to the first power/exhaust thrust plate (6);
a second air intake (59) is provided through which air is fed to the intake/compression toroidal chamber (1) downstream the second intake/compression thrust plate (55) and adjacent thereto;
a second transfer pipe (510) is provided communicating a second transfer outlet of the intake/compression toroidal chamber (1) located upstream said second intake/compression thrust plate (55) and adjacent thereto with a second transfer inlet of the power/exhaust toroidal chamber (2) located downstream said second power/exhaust thrust plate (56) and adjacent thereto, compressed air being transferred through said second transfer pipe (510) from the intake/compression toroidal chamber (1) to the power/exhaust toroidal chamber (2);
a second fuel injector is provided by which fuel is injected to the power/exhaust toroidal chamber and mixed with the compressed air downstream the second power/exhaust thrust plate (56) and adjacent thereto;
second ignition means are provided for igniting the fuel and air mixture within the power/exhaust toroidal chamber (2) downstream the second power/exhaust thrust plate (56) and adjacent thereto; and
a second exhaust port (512) is provided through which the burnt fuel and air mixture is exhausted from the power/exhaust toroidal chamber (2) upstream the second power/exhaust thrust plate (56) and adjacent thereto.

12. The four stroke rotary piston engine according to claim 6, **characterized in that**:
one or more additional intake/compression pistons (53, 63, 73) are attached together with the first intake/compression piston (3) to the power shaft (8), distributed at regular angular intervals therearound, and arranged to move in the one direction within the intake/compression toroidal chamber (1);
one or more additional power/exhaust pistons (54, 64, 74) are attached together with the first power/exhaust piston (4) to the power shaft (8), distributed at regular angular intervals therearound, and arranged to move in the one direction within the power/exhaust toroidal chamber (2);
one or more additional intake/compression thrust plates (55, 65, 75) are arranged and independently actuated in coordination with the first intake/compression thrust plate (5) to close and open the intake/compression toroidal chamber (1) at locations distributed at regular angular intervals around the axis of revolution;
one or more power/exhaust thrust plates (56, 66, 76) are arranged and independently actuated in coordination with the first power/exhaust thrust plate (6) to close and open the power/exhaust toroidal chamber (2) at locations distributed at regular angular intervals around the axis of revolution;
one additional air intake is provided downstream each of said additional intake/compression thrust plates (55, 65, 75) and adjacent thereto, through which air is fed to the intake/compression toroidal chamber (1);
one or more additional transfer pipes are provided, each communicating an additional transfer outlet of the intake/compression toroidal chamber (1) located upstream each of said additional intake/compression thrust plates (55, 65, 75) and adjacent thereto with an additional transfer inlet of the power/exhaust toroidal chamber (2) located downstream each of said additional power/exhaust thrust plate (56, 66, 76) and adjacent thereto, compressed air being transferred through said additional transfer pipes from the intake/compression toroidal chamber (1) to the power/exhaust toroidal chamber (2);
one or more additional fuel injectors are provided by which fuel is injected to the power/exhaust toroidal chamber (2) and mixed with the compressed air downstream each of the additional power/exhaust thrust plates (56, 66, 76) and adjacent thereto;
one or more additional ignition means are provided for igniting the fuel and air mixture within the power/exhaust toroidal chamber (2) downstream each additional power/exhaust thrust plate (56, 66, 76) and adjacent thereto; and
an additional exhaust port is provided upstream each additional power/exhaust thrust plate (56, 66, 76) and adjacent thereto through which the burnt fuel and air mixture is exhausted from the power/exhaust toroidal chamber (2).

13. The four stroke rotary piston engine according to any one of claims 6 to 12, **characterized in that**:
one or more additional pairs of intake/compression toroidal chamber and power/exhaust toroidal chamber (81, 82; 91, 92) are provided having the same axis of revolution than the first pair of intake/compression and power/exhaust toroidal chambers (1, 2);
at least one additional intake/compression piston (83, 93) attached to said power shaft (8) is arranged to move in in said one direction about the axis of revolution within each of said additional intake/compression toroidal chambers (81, 91);
at least one additional power/exhaust piston (84, 94) attached to said power shaft (8) is arranged to move in the one direction about the axis of revolution within each of said additional power/exhaust toroidal chambers (82, 92);
at least one additional intake/compression thrust plate (85, 95) is arranged and independently actuated to close and open each of the additional intake/compression toroidal chambers (81, 91);
at least one additional power/exhaust thrust plate (86, 96) is arranged and independently actuated to close and open each of the additional power/exhaust toroidal chambers (82, 92);
an additional air intake (89, 99) is provided in each additional intake/compression toroidal chamber (81, 91) downstream the corresponding additional intake/compression thrust plate (85, 95);
an additional exhaust port (812, 912) is provided in each power/exhaust toroidal chamber (82, 92) upstream the corresponding additional power/exhaust thrust plate (86, 96);
one or more transfer pipes are provided, each communicating a transfer outlet of each additional intake/compression toroidal chamber (81, 91) located upstream the corresponding additional intake/compression thrust plate (85, 95) and adjacent thereto with a transfer inlet of the additional power/exhaust toroidal chamber (82, 92) of the same pair located downstream the corresponding additional power/exhaust thrust plate (86, 96) and adjacent thereto, compressed air being transferred through said transfer pipe (810, 910) from each additional intake/compression toroidal chamber (81, 91) to the additional power/exhaust toroidal chamber (81, 92) of the same pair;
one or more additional fuel injectors (811, 911) are provided by each of which fuel is injected to each additional power/exhaust toroidal chamber (82, 92) and mixed with the compressed air downstream the corresponding additional power/exhaust thrust plate (86, 96); and
one or more additional ignition means are provided for igniting the fuel and air mixture within each additional power/exhaust toroidal chamber (82, 92).

14. The four stroke rotary piston engine according to any one of the preceding claims, **characterized in that** a turbine (28) is connected to the power shaft (8), said turbine being fed with the burnt fuel and air mixture exhausted from the or each power/exhaust toroidal chamber (2, 82, 92) through the or each exhaust port (12, 512, 812,912).

15. The four stroke rotary piston engine according to any one of the preceding claims, **characterized in that** said ignition means comprise a spark plug (27, 87, 97) located in the or each power/exhaust toroidal chamber (2, 82, 92) downstream the or each power/exhaust thrust plate (6, 56, 66, 76, 86, 96) and adjacent thereto.
